Europäisches Patentamt

European Patent Office

Office européen des brevets

(19)

(11) Veröffentlichungsnummer: **0 213 399**
**A2**

(12) # EUROPÄISCHE PATENTANMELDUNG

(21) Anmeldenummer: 86110518.7

(22) Anmeldetag: 30.07.86

(51) Int. Cl.4: **B23Q 3/155**

Ein Antrag gemäss Regel 88 EPÜ auf Berichtigung der Seite 8 der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 31.08.85 DE 3531160

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **Gebrüder Honsberg GmbH**
**Hastener Strasse 22-26**
**D-5630 Remscheid-Hasten(DE)**

(72) Erfinder: **Rupp, Peter**
**Kaiserswertherstrasse 42**
**D-4000 Düsseldorf(DE)**

(74) Vertreter: **Selting, Günther, Dipl.-Ing. et al**
**Deichmannhaus am Hauptbahnhof**
**D-5000 Köln 1(DE)**

(54) **Werkzeugwechsler.**

(57) Der Werkzeugwechsler weist mehrere Greifhände (29') auf, die seitlich an den Flansch - (31) eines Werkzeugs (13) heranbewegt werden können. An der Greifhand ist eine Verriegelungsvorrichtung (39) befestigt, die von einer Kulissenführung (49) entriegelt wird, wenn die Greifhand sich an der Werkzeugaufnahme (12) befindet. Die Verriegelungsvorrichtung (39) trägt Verriegelungselemente (48), die den Flansch (31) an der Greifhand gegen Herausziehen sichern. Ein Schrauber (51) bewirkt das Lösen und Verriegeln des Schaftes (30) des Werkzeugs (13) im Innern der Werkzeugaufnahme (12). Der die Greifhand (29') tragende Halter ist relativ zu einem quer zur Achse der Werkzeugaufnahme (12) bewegbaren Block durch eine Antriebsvorrichtung bewegbar, so daß er parallel zur Achse der Werkzeugaufnahme (12) bewegt werden kann, während der Schrauber (51) mit der Halteschraube (35) in Eingriff ist. Es kann daher ein vollständiger Werkzeugwechsel durchgeführt werden, ohne daß der Schrauber (51) außer Eingriff mit der Halteschraube - (35) kommt. Hierdurch wird der Werkzeugwechselvorgang beschleunigt und steuerungsmäßig vereinfacht.

FIG.4

## Werkzeugwechsler für eine Werkzeugmaschine

Die Erfindung betrifft einen Werkzeugwechsler für eine Werkzeugmaschine, welche eine Werkzeugaufnahme aufweist, mit einem drehbaren Halter, der mehrere Greifhände zum Angreifen an dem Flansch eines Werkzeugs aufweist, einer ersten Bewegungsvorrichtung zum Bewegen des Halters zwischen einer Rückzugsposition und einer Ausrichtposition, in der eine Greifhand von der Werkzeugaufnahme steht, und mit einer zweiten Bewegungsvorrichtung zum Bewegen des Halters parallel zur Achse der Werkzeugaufnahme.

Werkzeugmaschinen, die geeignet sind, unterschiedliche Bearbeitungsvorgänge mit verschiedenen Werkzeugen an Werkstücken vorzunehmen, benötigen einen Werkzeugwechsler, der imstande ist, ein Werkzeug aus der Werkzeugaufnahme der Werkzeugmaschine herauszunehmen, dieses Werkzeug von der Werkzeugmaschine zu entfernen und ein anderes Werkzeug in die Werkzeugaufnahme einzusetzten. In der Praxis gibt es verschiedene Werkzeugwechselsysteme, bei denen jeweils die Form des rückwärtigen Halteteils des Werkzeugs an die Form der Werkzeugaufnahme angepaßt ist. Die Werkzeugaufnahme kann zum Beispiel konisch oder zylindrisch gestaltet sein. Die Werkzeugmaschine enthält eine Arretiervorrichtung, mit der ein in die Werkzeugaufnahme eingesetztes Werkzeug selbsttätig oder manuell verriegelt wird.

Der Halter des Werkzeugwechslers muß imstande sein, ein Werkzeug aus der Werkzeugaufnahme herauszuziehen, nachdem das Werkzeug in der Maschine entriegelt worden ist, und dieses Werkzeug aus der Ausrichtposition zu entfernen. Er muß ferner imstande sein, ein anderes Werkzeug in die Ausrichtposition zu bringen und anschließend in die Werkzeugaufnahme einzusetzen. Zu diesem Zweck sind Werkzeugwechsler bekannt, die mit mehreren Greifhänden ausgestattet sind, welche das Werkzeug festhalten und freigeben können. Der Freigabemechanismus erfordert in der Regel eine maschinelle Steuerung, um das Werkzeug zu ergreifen bzw. festzuhalten und freizugeben. Außerdem muß es möglich sein, manuell ein Werkzeug in die Greifhand einzusetzen. Zur Befestigung eines Werkzeugs in der Werkzeugaufnahme sowie zum Lösen des Werkzeugs ist es erforderlich, eine in der Werkzeugaufnahme vorgesehene Halteschraube zu drehen. Das Spannen und Lösen der Halteschraube ist bei den bekannten Werkzeugmaschinen zeitraubend, weil der zum Drehen der Halteschraube benötigte Schrauber jedesmal von neuem an die Halteschraube angesetzt werden muß, wenn ein Werkzeug aus der Werkzeugaufnahme entnommen wird und wenn ein neues Werkzeug in die Werkzeugaufnahme eingesetzt wird.

Der Erfindung liegt die Aufgabe zugrunde, einen Werkzeugwechsler der eingangs genannten Art zu schaffen, bei dem das Festspannen und Lösen eines Werkzeugs in der Werkzeugaufnahme jeweils automatisch und mit geringem Zeitaufwand erfolgt, wobei zwischen dem Entnehmen eines Werkzeugs aus der Werkzeugaufnahme und dem Einsetzen eines neuen Werkzeugs in die Werkzeugaufnahme keine Umsetzbewegungen des Schraubers erforderlich sind.

Die Lösung dieser Aufgabe erfolgt mit den Merkmalen des Anspruchs 1.

Nach der Erfindung ist der Schrauber an einem bewegbaren Block derart befestigt, daß er mit der Halteschraube in Eingriff kommt, wenn der Block in einer Position gefahren wird, in der sich eine Greifhand des Halters in der Ausrichtposition vor der Werkzeugaufnahme befindet. In dieser Ausrichtposition kann der Halter vorgeschoben, gedreht und zurückgezogen werden, ohne daß der Eingriff zwischen Schrauber und Halteschraube aufgehoben werden muß. Der Schrauber kann daher während des gesamten Wechselvorgangs, bei dem ein Werkzeug durch ein anderes ausgewechselt wird, in Eingriff mit der Halteschraube bleiben. Dadurch wird die für den Werkzeugwechsel erforderliche Zeit verringert und die Steuerung des Werkzeugwechslers wird vereinfacht.

Vorteilhafte Ausgestaltungen und Weiterbildungen der Erfindung sind in den Unteransprüchen angegeben.

Von besonderer Bedeutung sind die Merkmale des Anspruchs 8. Hiernach übergreifen die Verriegelungselemente den Flansch in dem Raum zwischen den Fingern einer Greifhand, um den Flansch umfangsmäßig festzuhalten. Die Verriegelungsvorrichtung kann daher auch bei solchen Werkzeugen eingesetzt werden, die einen nicht unterbrochenen umlaufenden Flansch aufweisen. Ferner bewirken die Verriegelungselemente eine Fixierung des Flansches, indem der Flansch von den Fingern der Greifhand und den Verriegelungselementen in einem Winkelbe reich von mehr als 180° umfangsmäßig umschlossen wird. Auf diese Weise ist ein fester definierter Sitz des Werkzeugs am Halter gewährleistet. Die Verriegelungselemente sind starr an der gabelförmigen Verriegelungsvorrichtung angebracht und sie benötigen keine separate Steuerung oder Betätigung. Hierdurch wird eine zuverlässige Arbeitsweise des Werkzeugwechslers bei geringer Störanfälligkeit erreicht. Außerdem wird die Genauigkeit der Positionierung der Werkzeuge im Werkzeugmagazin erhöht.

Im folgenden wird unter Bezugnahme auf die Zeichnungen ein Ausführungsbeispiel der Erfindung näher erläutert.

Es zeigen:

Fig. 1 eine Frontansicht des Werkzeugwechslers mit Werkzeugmaschine,

Fig. 2 eine Draufsicht von Fig. 1,

Fig. 3 eine Seitenansicht von Fig. 1 aus Richtung des Pfeiles III,

Fig. 4 in vergrößertem Maßstab eine Draufsicht einer Greifhand, die sich in Richtung auf die Werkzeugaufnahme bewegt, teilweise geschnitten,

Fig. 5 eine ähnliche Darstellung wie Fig. 4, wobei die Greifhand das Werkzeug aufnimmt und der Schrauber zum Lösen des Werkzeugs gedreht wird,

Fig. 6 in ähnlicher Darstellung wie die Fig. 4 und 5 das Abziehen des Werkzeugs von der Werkzeugaufnahme,

Fig. 7 eine Ansicht der Verriegelungsvorrichtung aus Richtung des Pfeiles VII von Fig. 4,

Fig. 8 einen Schnitt entlang der Linie VIII-VIII aus Fig. 6,

Fig. 9 eine andere Ausführungsform der Kupplung zwischen Schrauber und Halteschraube, und

Fig. 10 in gleicher Darstellung wie Fig. 5 das Angreifen der Greifhand an einem Werkzeug mit Steilkegel.

In den Zeichnungen ist eine Werkzeugmaschine 10 dargestellt, deren Typ und Aufbau keinen Einschränkungen unterliegt. Es kann sich beispielsweise um eine Werkzeugmaschine mit bewegbarem oder festem Maschinenkörper handeln, oder um ein Bearbeitungszentrum o.dgl. Die Werkzeugmaschine 10 weist eine drehbare Spindel 11 auf, an deren vorderen Ende die Werkzeugaufnahme 12 befestigt ist. An der Werkzeugaufnahme 12 kann ein Werkzeug 13 befestigt werden, das bei drehender Spindel 11 auf ein (nicht dargestelltes) Werkstück einwirkt. Die verschiedenen Werkzeuge 13 sind in den Zeichnungen lediglich schematisch dargestellt.

Seitlich neben der Werkzeugmaschine 10 steht der Werkzeugwechsler 14. Dieser weist eine Basis 15 auf, die entweder auf dem Boden steht oder an dem Maschinenkörper der Werkzeugmaschine befestigt ist. Auf der Basis 15 sind zwei parallele horizontale Führungsstangen 16 befestigt, die quer zur Achse der Werkzeugaufnahme 12 verlaufen und auf denen ein Block 17 mittels einer Antriebsvorrichtung 18 verfahrbar ist.

In dem Block 17 ist ein starrer Rahmen 19 linear verschiebbar geführt. Der Rahmen 19 weist zwei parallele Führungsstangen 20,21 auf, die übereinander angeordnet sind und parallel zur Achse der Werkzeugaufnahme 12 verlaufen. Die Führungsstangen 20,21 sind in Führungsbohrungen des Blockes 17 geführt. Die vorderen Enden der Führungsstangen 20 und 21 sind durch eine Lagervorrichtung 22 miteinander verbunden, auf der der Halter 23 in Form eines um eine horizontale Achse drehbaren Rades gelagert ist. Eine an dem Block 17 befestigte Antriebsvorrichtung 24 dient zum Verschieben des Rahmens 19 relativ zum Block 17.

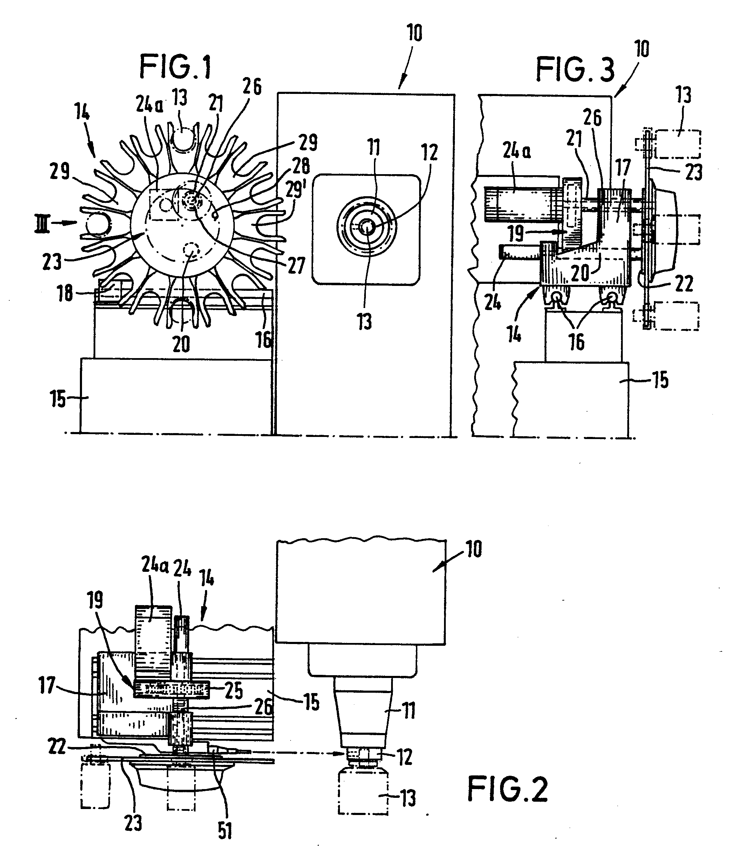

Das Drehen des Halters 23 um die Achse der Lagervorrichtung 22 herum erfolgt durch einen Drehantrieb 24a, der an dem Rahmen 19 befestigt ist und über ein Getriebe 25 die Welle 26 dreht. Diese Welle 26 führt koaxial durch die hohle Führungsstange 21 hindurch. Auf ihrem vorderen Ende sitzt ein Ritzel 27 (Fig. 1), dessen Verzahnung in die Verzahnung eines Innenzahnkranzes 28 des Halters 23 eingreift. Bei Betätigung des Drehantriebs 24a wird somit der Halter 23 relativ zu dem Rahmen 19 um die Lagervorrichtung 22 herum gedreht. Der Drehantrieb 24a kann entweder ein üblicher Drehmotor oder ein Schrittmotor sein.

An dem Halter 23 sind in einer quer zur Achse der Werkzeugaufnahme verlaufenden Ebene zahlreiche radial abstehende Greifhände 29 befestigt, von denen jede zwei parallele Finger aufweist. Jede Greifhand besteht aus einem starren Blech mit radial nach außen gerichteter Öffnung, die durch zwei Finger begrenzt ist. Zwischen die nach außen ragenden Finger der Greifhand kann ein Werkzeug 13 geschoben werden.

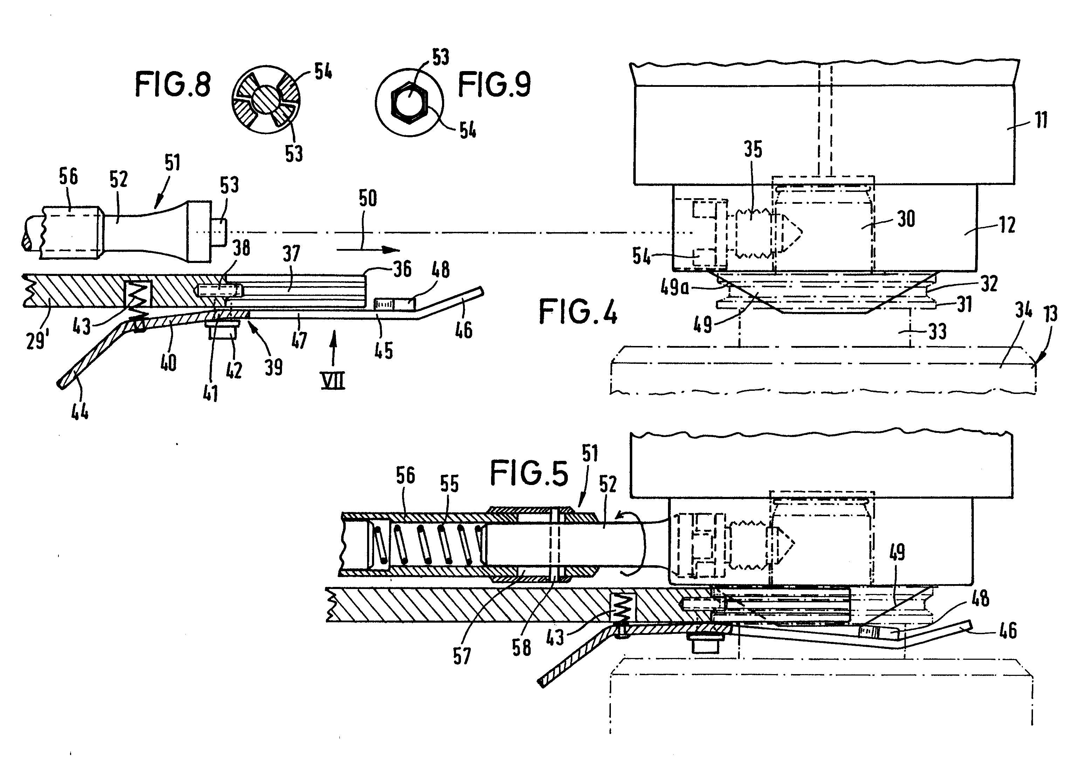

Aus Fig. 4 ist der Haltebereich am rückwärtigen Ende des Werkzeugs 13 zu ersehen. Am rückwärtigen Ende des Werkzeugs 13 befindet sich ein Schaft 30, der in eine entsprechende Bohrung der Werkzeugaufnahme 12 eingeschoben werden kann. Vor dem Schaft 30 ist der Flansch 31 angeordnet, dessen Umfangsfläche eine umlaufende Nut 32 mit schrägen Flanken aufweist. Vor dem Flansch 31 befindet sich ein zylindrischer Abschnitt 33 und an diesen schließt sich der Hauptteil 34 des Werkzeugs an. Sämtliche Abschnitte 30,31,32 und 33 und 34 sind koaxial zueinander angeordnet.

Bei dem Ausführungsbeispiel nach den Fign. 4 bis 6 wird der rückwärtige Schaft 30 in der Werkzeugaufnahme 12 durch eine seitlich eingeschraubte Halteschraube 35 arretiert. Die Halteschraube 35 ist in eine radiale Gewindebohrung der Aufnahme 12 eingeschraubt und sie ragt in eine seitliche Ausnehmung des Schaftes 30 hinein. Die Achse des drehbaren Halters 23 des Werkzeugwechslers 14 ist bei diesem Ausführungsbeispiel auf gleicher Höhe angeordnet wie die Achse der Werkzeugaufnahme 12. Die Achse des Halters 23 ist in jedem Fall radial zur Achse der Werkzeugaufnahme 12 bewegbar. In jeder Stellung, in der der drehbare Halter 23 anhalten kann, befindet sich eine Greifhand 29' auf gleicher Höhe wie die Werkzeugaufnahme 12. Diese Greifhand 29' ist in der Arbeitsstellung.

In Fig. 4 ist der Fall dargestellt, daß der Halter 23 sich relativ zu dem Block 17 in der Rückzugsposition befindet. In der Rückzugsposition liegen alle Greifhände 29 in derselben vertikalen Ebene wie der Flansch 31 eines in die Werkzeugaufnahme 12 eingesetzten Werkzeugs. Wird nun durch Betätigung des Motors 18 der Block 17 in Richtung auf die Werkzeugaufnahme 12 bewegt, dann umgreifen die Finger 36 der Greifhand 29' den Flansch 31 des Werkzeugs 13 (Fign. 4 und 5). Die Aufnahme der Greifhand 29 weist innen einen Steg 37 auf, der in die Nut 32 des Flansches 31 eingreifen kann. Ein von der Greifhand 29' umgriffenes Werkzeug kann ausschließlich in radialer Richtung von der Greifhand abgezogen werden. Um das Werkzeug 13 in definierter Drehstellung in die Greifhand 29' einzusetzen, ist am Boden der Aufnahme der Greifhand 29' ein Vorsprung 38 in Form eines Bolzens angeordnet, der in eine (nicht dargestellte) seitliche Ausnehmung der Nut 32 eindringt.

Zum Arretieren des Werkzeugs 13 an der Greifhand ist jede Greifhand mit einer Verriegelungsvorrichtung 39 ausgestattet. Diese Verriegelungsvorrichtung besteht aus einer starren Platte 40, die auf der der Werkzeugaufnahme 12 abgewandten Außenseite der Greifhand angeordnet ist. Die Platte 40 weist eine vertikale Knicklinie 41 auf, in deren Bereich sie mit Schrauben 42 an der Greifhand 29 befestigt ist. Der zur Achse des Halters 23 weisende Bereich der Platte 40 verläuft, - schräg nach außen. Gegen diesen Bereich drücken Federn 43, die an der Greifhand 29 abgestützt sind. An den schrägen Bereich schließt sich ein weiterer nach außen abgeknickter Bereich 44 an.

Die Platte 40 bildet eine Wippe, die um die Knicklinie 41 herum im Bezug auf die Greifhand 29 in Grenzen schwenkbar ist. Zur Ermöglichung dieser Schwenkbewegung sind die Schrauben 42 als Bundschrauben ausgebildet, die das erforderliche Spiel zulassen. Die Federn 43 drücken die auf der entgegengesetzten Seite der Wippe angeordneten Schenkel 45 gegen die Außenseiten der beiden Finger 36 der Greifhand 29. Die Schenkel 45 überragen die Finger 36 und an ihren Enden befindet sich jeweils ein in Richtung auf die Werkzeugaufnahme 12 abgeknickter Bereich 46. Zwischen den Schenkeln 45 der Platte 40 befindet sich eine seitlich offene Ausnehmung 47, die imstande ist, den zylindrischen Abschnitt 33 des Werkzeugs 13 aufzunehmen. Die Ausnehmung 47 ist aber nicht groß genug zur Aufnahme des Flansches 31.

An den der Werkzeugaufnahme 12 zugewandten Seiten der beiden Schenkel 45 befinden sich abstehende Verriegelungselemente 48.

An der Werkzeugaufnahme 12 ist eine Kulissenführung 49 in Form einer vom vorderen Ende der Werkzeugaufnahme 12 abstehenden Platte befestigt. Die Spindel 11 der Werkzeugmaschine ist so gesteuert, daß sie in einer definierten Winkelstellung anhält, in der die Kulissenführung 49 z.B. horizontal über der Öffnung zur Aufnahme des Schaftes 31 angeordnet ist.

Wenn die Greifhand 29' aus der in Fig. 4 dargestellten Position in Richtung des Pfeiles 50 radial auf die Werkzeugaufnahme 12 zubewegt wird, stößt der äußere Abschnitt 46 der Verriegelungsvorrichtung 39 gegen die schräge Anlaufkante 49a der Kulissenführung 49, so daß die Verriegelungsvorrichtung 39 um die Knicklinie 41 herum entgegen der Wirkung der Federn 43 nach außen klappt. Dadurch wird erreicht, daß die Verriegelungs elemente 48 nicht mit dem Flansch 31 kollidieren. Die Verriegelungselemente 48 bewegen sich gemäß Fig. 5 an dem Flansch 31 vorbei. Wenn die Greifhand 29', die in Fig. 5 dargestellte Position erreicht hat, hat der Abschnitt 46 die Kulissenführung 49 bereits verlassen, so daß die Federn 43 die Schenkel 45 axial gegen die Finger 36 drücken. Dabei werden die Verriegelungselemente 48 über den Flansch 31 des Werkzeugs 13 geschoben.

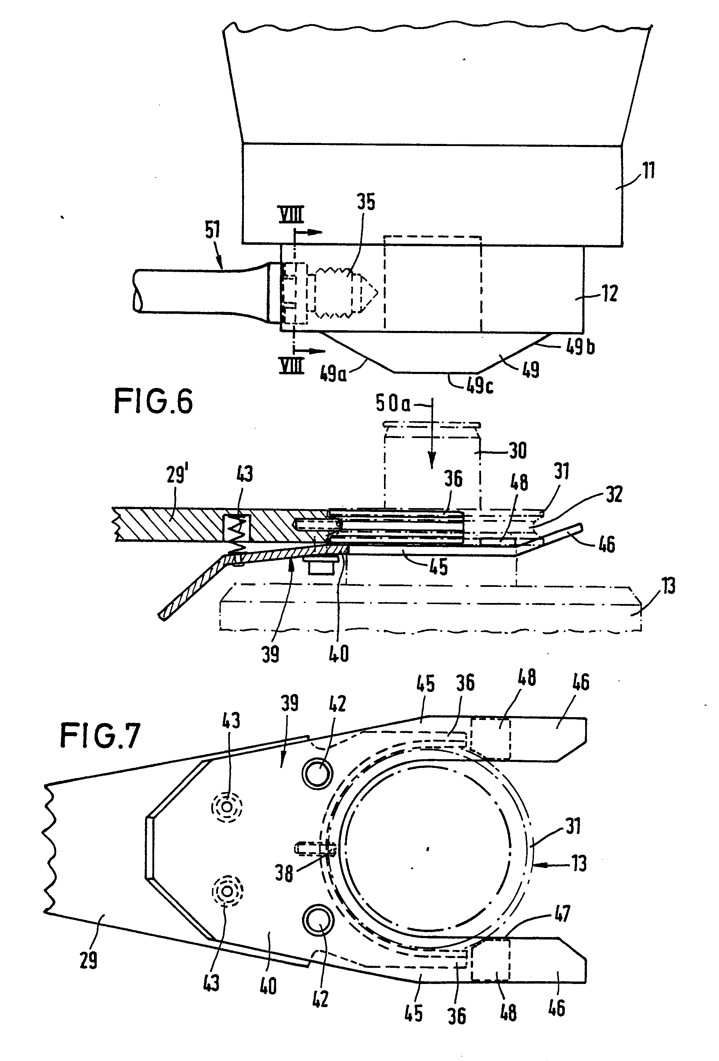

Wie Fig. 7 zeigt, umschließen die Finger 36 die eine Hälfte des Umfangs des Flansches 31. Die Verriegelungselemente 48 greifen an der anderen Hälfte des Umfangs dieses Flansches an, so daß in der in Fig. 6 dargestellten Position der Verriegelungsvorrichtung 39 der Flansch 31 zwischen den Fingern der Greifhand 29' verriegelt ist und durch die Verriegelungselemente 48 daran gehindert wird, sich radial aus der Greifhand zu entfernen. In diesem Zustand kann durch Betätigung der Antriebseinrichtung 24 der Rahmen 19 relativ zu dem Block 17 vorgeschoben werden, so daß sich der Halter 23 zusammen mit allen Greifhänden 29,29' in axialer Richtung von der Werkzeugaufnahme 12 entfernt (Fig. 6) und dabei das Werkzeug 13 mitnimmt.

Andererseits kann ein neues Werkzeug in die leere Werkzeugaufnahme 12 eingesetzt werden, indem die Greifhand 29, die dieses Werkzeug trägt, durch Drehen des Halters 23' in die Position 29' gebracht und anschließend durch Betätigung der Antriebsvorrichtung 24 der Rahmen 19 zusammen mit den Halter 23 in Richtung auf die Werkzeugaufnahme 12 bewegt wird. Diese Bewegung erfolgt entgegen der Richtung des Pfeiles 50a in Fig. 6. Wenn der Schaft 30 in die Öffnung der Werkzeugaufnahme 12 eingedrungen ist, stößt die vordere Flanke 49c der Ku lissenführung 49 gegen den einen Schenkel 45 der Verriegelungsvorrichtung 39, so daß die Verriegelungselemente 48 außer Eingriff mit dem Flansch 31 gebracht werden. Wird anschließend die Greifhand 29' radial von dem Flansch 31 abgezogen, dann gleitet der Abschnitt 46 des oberen Schenkels 45 entlang den Flanken 49b,49c,49a der Kulissenführung 49, wodurch sichergestellt ist, daß die Verriegelungselemente 48 nicht wieder einschnappen können.

In der in Fig. 6 dargestellten Verriegelungsposition liegt die Vorderfläche des Flansches 31 an der Rückseite des Bleches 40 an. Das Blech 40 bildet im Fußbereich der Ausnehmung 45 gleichzeitig einen Anschlag für den Flansch 31.

Wenn in eine der Greifhände 29 am Halter 23 ein Werkzeug 13 eingesetzt werden soll, kann dies auf einfache Weise durch Einhandbedienung erfolgen, indem das Werkzeug mit dem Flansch 31 gegen den Abschnitt 46 gedrückt und damit die Verriegelungsvorrichtung 39 geöffnet wird. Das Werkzeug kann dann zwischen die Finger der betreffenden Greifhand geschoben werden. Wenn es seine richtige Position erreicht hat, wird die äußere Umfangshälfte des Flansches von den einschnappenden Verriegelungselementen 48 verriegelt. Auf diese Weise wird das Werkzeug 13 unverlierbar an der Greifhand festgehalten.

Bei dem dargestellten Ausführungsbeispiel erfolgt die Arretierung des Werkzeugs 13 in der Werkzeugaufnahme 12 mit Hilfe der Halteschraube 35. Zum automatischen Betätigen der Halteschraube 35 ist an dem Block 17 der Schrauber 51 angebracht, der in radialer Ausrichtung zur Werkzeugaufnahme 12 von dem Block 17 absteht. Der Schrauber 51 weist einen Schaft 52 auf, der am äußeren Ende Kupplungsmittel 53 trägt, welche bei der Anstellbewegung des Blockes 17 in Richtung auf die Werkzeugaufnahme 12 entlang der Führungsstangen 16 mit entsprechenden Kupplungsmitteln 54 der Halteschraube 35 zusammengreifen. Wenn die Greifhand 29' den Flansch 31 des Werkzeugs übergriffen hat, befinden sich die Kupplungsmittel 53 und 54 in gegenseitigem Eingriff. Dann kann durch Drehen des Schraubers 51 mit einer (nicht dargestellten) Antriebseinrichtung die Halteschraube 35 gelöst oder festgeschraubt werden. Die Antriebseinrichtung dreht eine Hülse 56, in die Schaft 52 axial eingesetzt ist. Die Hülse 56 enthält eine den Schaft 52 axial abstützende Feder 55. Der Schaft 52 ist mit einem Querstift 58, der in einer Längsführung 57 der Hülse 56 bewegbar ist, drehfest mit der Hülse 56 verbunden. Wenn die Kupplungsmittel 53 und 54 nicht ineinandergreifen, weicht der Schaft 52 unter Zusammendrückung der Feder 55 zurück. Wird anschließend der Schaft 52 gedreht, dann rasten die Kupplungsmittel 53 und 54 ineinander ein.

Wenn der Halter 23 zusammen mit dem Rahmen 19 vorgeschoben wird, so daß die Greifhand 29' sich von der Werkzeugaufnahme 12 entfernt, verbleibt der Schrauber 51 gemäß Fig. 6 in Eingriff mit der Halteschraube 35. Da der Schrauber an dem Block 17 angebracht ist, der sich lediglich radial (zur Werkzeugaufnahme 12) bewegt, macht er die Axialbewegung des Rahmens 19 nicht mit. Während des gesamten Werkzeugwechsels bleibt der Schrauber 51 daher in Eingriff mit der Halteschraube 35.

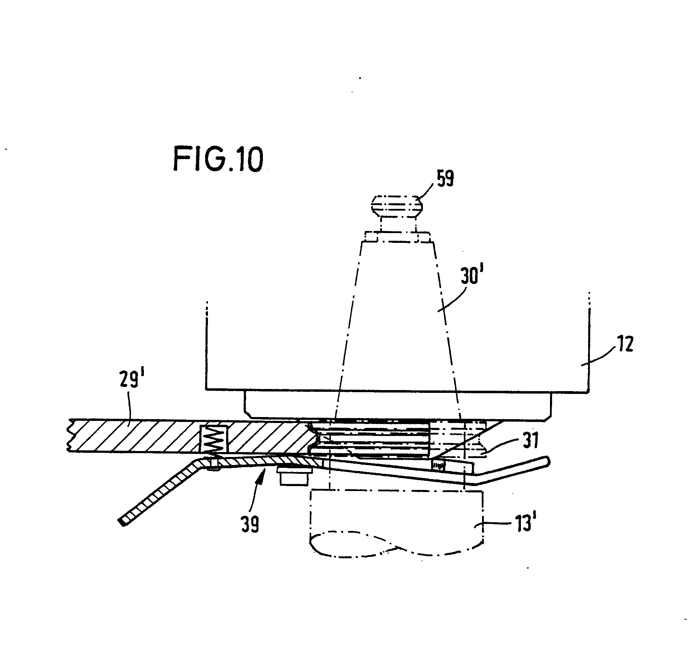

Fig. 10 zeigt schematisch den Einsatz des Werkzeugwechslers bei einem anderen Werkzeugsystem, bei dem das Werkzeug 13' einen kegelförmigen Schaft 30' aufweist, der an seinem rückwärtigen Ende einen Kopf 59 trägt, welcher von einem Verriegelungsmechanismus im Innern der Werkzeugmaschine umgriffen werden kann. In diesem Fall ist eine Halteschraube nicht erforderlich. Der Werkzeugwechsler weist demnach auch keinen Schrauber 51 auf.

## Ansprüche

1. Werkzeugwechsler für eine Werkzeugmaschine, welche eine Werkzeugaufnahme (12) aufweist, mit mindestens einem drehbaren Halter (23), der mehrere Greifhände (29) zum Angreifen an dem Flansch (31) eines Werkzeugs (13) aufweist, einer ersten Bewegungsvorrichtung zum Bewegen des Halters zwischen einer Rückzugsposition und einer Ausrichtposition, in der eine Greifhand (29') vor der Werkzeugaufnahme (12) steht, und mit einer zweiten Bewegungsvorrichtung zum Bewegen des Halters (23) parallel zur Achse der Werkzeugaufnahme (12),

**dadurch gekennzeichnet,**

daß ein den Halter (23) tragender Block (17) einen drehend antreibbaren Schrauber (51) trägt, der in Richtung auf die Werkzeugaufnahme (12) absteht und beim Bewegen des Halters (23) in die Ausrichtposition gegen eine an der Werkzeugaufnahme (12) vorgesehene Halteschraube (35) für das Werkzeug (13) stößt und Kupplungsmittel (53) zum Drehen der Halteschraube (35) aufweist, und daß der Halter (23) relativ zu dem Block (17) durch eine Antriebsvorrichtung (24) parallel zur Achse der Werkzeugaufnahme (12) bewegbar ist, während der Schrauber (51) mit der Halteschraube (35) in Eingriff ist.

2. Werkzeugwechsler nach Anspruch 1, dadurch gekennzeichnet, daß der Schrauber - (51) von einer Feder (55) axial abgestützt ist.

3. Werkzeugwechsler nach Anspruch 1 oder 2, dadurch gekennzeichnet, daß der Halter (23) ein drehbares Rad ist, an dem mehrere Greifhände (29) befestigt sind und daß die Achse des Rades in gleicher Höhe wie diejenige der Werkzeugaufnahme (12) angeordnet ist.

4. Werkzeugwechsler nach einem der Ansprüche 1 bis 3,

dadurch gekennzeichnet, daß der Halter (23) an einem Rahmen (19) angebracht ist, der mit einer Linearführung (20,21) an dem Block (17) parallel zur Achse der Werkzeugaufnahme (12) geführt ist.

5. Werkzeugwechsler nach einem der Ansprüche 1 bis 4,

dadurch gekennzeichnet, daß der Block (17) an einer Basis (15) mit einer Linearführung (16) quer zur Achse der Werkzeugaufnahme (12) geführt ist.

6. Werkzeugwechsler nach einem der Ansprüche 1 bis 5,

dadurch gekennzeichnet, daß der Halter (23) an einem starren Rahmen (19) drehbar gelagert ist, der parallele Führungsstangen (20,21) aufweist, die an dem Block (17) verschiebbar sind, und daß der Rahmen (19) auf der dem Halter (23) abgewandten Seite des Blocks (17) einen Drehantrieb (24a) trägt, dessen Welle (26) den Halter (23) drehend antreibt.

7. Werkzeugwechsler nach Anspruch 6,

dadurch gekennzeichnet, daß die Welle (26) durch eine hohle Führungsstange (21) hindurchgeht.

8. Werkzeugwechsler nach Anspruch nach einem der vorhergehenden Ansprüche,

dadurch gekennzeichnet, daß die Greifhand (29), an der der Werkzeugaufnahme (12) abgewandten Seite eine Verriegelungsvorrichtung (39) trägt, die mindestens ein den Flansch (31) des Werkzeugs übergreifendes Verriegelungselement (48) aufweist, daß an der Werkzeugmaschine (10) eine Kulissenführung (49) angebracht ist, die das Verriegelungselement (48) axial aus dem Bereich des Flansches (31) drückt, wenn die Greifhand (29') vor die Werkzeugaufnahme (12) bewegt wird, daß die Greifhand (29) den Flansch (31) des Werkzeugs - (13) nur auf einer Hälfte des Umfangs eng umschließt und daß das Verriegelungselement (48) den Flansch (31) übergreift und an der anderen Hälfte des Umfangs dieses Flansches angreift.

9. Werkzeugwechsler nach Anspruch 8,

dadurch gekennzeichnet, daß die Verriegelungsvorrichtung (39) aus einer Platte (40) besteht, die eine Ausnehmung (47) für den seitlichen Durchtritt des Werkzeugs (13) aufweist und an ihren beiden Schenkeln (45) Verriegelungselemente (48) trägt; und daß die Platte (40) von einer elastischen Andrückvorrichtung (42) gegen die Außenseite der Greifhand (29) gedrückt wird.

FIG.1

FIG.3

FIG.2

FIG.8

FIG.9

FIG.4

FIG.5

FIG.6

FIG.7

# FIG.10

# VON KREISLER  SCHÖNWALD  EISHOLD  FUES
# VON KREISLER  KELLER  SELTING  WERNER

PATENTANWÄLTE

Dr.-Ing. von Kreisler † 1973
Dr.-Ing. K. W. Eishold † 1981

Dr.-Ing. K. Schönwald
Dr. J. F. Fues
Dipl.-Chem. Alek von Kreisler
Dipl.-Chem. Carola Keller
Dipl.-Ing. G. Selting
Dr. H.-K. Werner

DEICHMANNHAUS AM HAUPTBAHNHOF
**D-5000 KÖLN 1**

AN DAS

EUROPÄISCHE PATENTAMT

-Generaldirektion 2-

Erhardtstraße 27

8000 München 2

EPA EPO-OEB
DG 1
Reçu:
1 2 AUG 1986

Sg-DB/my
4. August 1986

Betr.: 86 110 518.7 vom 30. Juli 1986
       Gebrüder Honsberg GmbH

Im Nachgang zum Anmeldeantrag vom 29. Juli 1986 werden drei
neue Seiten 8 mit der Bitte übersandt, diese Seiten gegen
die ursprünglichen Seiten 8 auszutauschen. In Zeilen 26/27
wurde eine offensichtliche Unrichtigkeit korrigiert.

Ferner werden die Vertretervollmacht, die Erfinderbenennung
sowie der Prioritätsbeleg entsprechend der deutschen Patentanmeldung P 35 31 160.6 vom 31. August 1985 überreicht.

Patentanwalt

Anlagen

In Zeile 26 wurde "zur Achse" durch "der Achse" und
in Zeile 27 wurde "weisende" durch "abgewandte" ersetzt.